# EUROPÄISCHE PATENTSCHRIFT

(11) **EP 1 908 972 B1**
(45) Veröffentlichungstag und Bekanntmachung des Hinweises auf die Patenterteilung: **02.11.2011**
(21) Anmeldenummer: 08000885.7
(22) Anmeldetag: 25.02.2003
(51) Int. Cl.: F16C 35/077, F16C 25/08

(54) **Entkopplungsvorrichtung für eine Lagerung einer Welle an einem Grundkörper sowie Radialwellfeder**
Decoupling device for mounting a support shaft on a base and radial ondular washer
Dispositif de désaccouplement d'un roulement d'un arbre situé sur un corps de base, et ressort ondulé radial

(30) Priorität: 28.02.2002 DE 10208995
(43) Veröffentlichungstag der Anmeldung: 09.04.2008
(62) Teilanmeldung aus: 03722195.9
(73) Patentinhaber: Schaeffler Technologies GmbH & Co. KG, 91074 Herzogenaurach (DE)
(72) Erfinder: Faust, Hartmut, Dr.-Ing., 77815 Bühl (DE); Friedmann, Oswald, 77839 Lichtenau (DE); Linnenbrügger, André, Dr., 77815 Bühl (DE); Glas, Ronald, 77880 Obersasbach (DE); Bauer, Christian, 77886 Lauf (DE); Wodtke, Hans-Walter, Dr., 53773 Hennef (DE)

(56) Entgegenhaltungen:
- DE-A1- 3 338 507
- DE-A1- 10 203 307
- DE-A1- 19 958 073

## Beschreibung

Die Erfindung betrifft eine Entkopplungsvorrichtung für eine Lagerung einer Welle an einem Grundkörper, insbesondere einer Welle eines mit einer Kette als Umschlingungsmittel arbeitenden CVT-Getriebes. Die Erfindung betrifft weiter eine Radialwellfeder für eine solche Entkopplungsvorrichtung.

In jüngerer Zeit finden in Kraftfahrzeugen zunehmend Kegelscheiben-Umschlingungsgetriebe mit kontinuierlich variabler Übersetzung Verwendung. Solche Kegelscheiben-Umschlingungsgetriebe enthalten zwei auf in gegenseitigem Abstand befindlichen Wellen gelagerte Kegelscheibenpaare, die von einem in Reibeingriff mit den Kegelflächen der Kegelscheibenpaare befindlichen Umschlingungsmittel umschlungen werden. Durch gegensinnige Veränderung des Abstandes zwischen den Kegelscheibenpaaren lässt sich die Übersetzung des Getriebes kontinuierlich verändern. Als Umschlingungsmittel werden insbesondere bei Getrieben, mit denen höhere Drehmomente übertragen werden können, beispielsweise Drehmomente im Bereich von 300 Nm und mehr, metallische Ketten verwendet.

Aus der deutschen Offenlegungsschrift DE 102 03 307 A1 ist eine Lageranordnung für ein solches Kegelscheibenumschlingungsgetriebe bekannt. Es wird eine Lageranordnung zur Lagerung von drehbaren Wellen des Getriebes beschrieben, das ein Lager mit einem Lageraußenring und einem Lagerinnenring umfasst, wobei der Lageraußenring in einer Aufnahme an Seitenflächen der Aufnahme axial gesichert ist und die Aufnahme eine im Wesentlichen zylindrische Innenwand aufweist, wobei zwischen dem Lageraußenring und der Innenwandung der Aufnahme ein in radialer Richtung flexibles Element angeordnet ist. Das flexible Element besteht aus zumindest einem in radialer Richtung gewellten oder mit Vorsprüngen versehenen Ringelement besteht. Weiterhin sind in axialer Richtung flexible Elemente zur Schwingungsdämpfung vorgesehen.

Ein elastisches Element zum toleranzausgleichenden Einbau von Lagern ist in der Offenlegungsschrift DE 33 38 507 A1 offenbart. Dieses elastische Element ist topfförmig ausgebildet, wobei der Mantel eines Fedemapfes aus einer belieben Anzahl von Lamellen besteht und an den Lamellen nach innen oder außen gerichtete Buckel vorgesehen sind. Das Element kann auch aus einem geschlossenen Mantel mit nach innen oder außen herausgestellten Federzungen gebildet sein. Die Lamellen oder der Mantel sind an der dem Boden abgewandten Seite flanschartig ausgebildet.

Der Erfindung liegt die Aufgabe zugrunde, die Geräuschübertragung, insbesondere die Körperschallübertragung, von den Kegelscheiben in ein Fahrzeug zu vermindern.

Diese Aufgabe wird mit einer Entkopplungsvorrichtung für eine Lagerung einer Welle an einem Grundkörper, insbesondere einer Welle eines mit einer Kette als Umschlingungsmittel arbeitenden Kegelscheiben-Umschlingungsgetriebes mit den Merkmalen des Patentanspruchs 1 gelöst.

Im folgenden werden vorteilhafte Ausführungsformen und Weiterbildungen der erfindungsgemäßen Entkopplungsvorrichtung beispielhaft genannt, wobei diese Beispiele nicht abschließend sind.

Auf die Außenfläche und radial zu dieser verlaufende Seitenflächen ist eine die Radialwellfeder bildende Federhülse mit insgesamt U-förmigem Querschnitt aufgesetzt, deren insgesamt achsparallel verlaufender Boden radial ausgebaucht ist.

Der Boden der Federhülse weist wenigstens zwei axial beabstandete, umlaufende radiale Wellungen mit axialer Wellenlängenrichtung auf.

Ein Ringbereich zwischen den radialen Wellungen ragt in eine umlaufende Ausnehmung der Außenfläche ein.

Der Boden der Federhülse weist wenigstens eine radiale Wellung mit in Umfangsrichtung verlaufender Wellenlängenrichtung auf.

Radiale Wellungen des Bodens mit axialer und/oder in Umfangsrichtung verlaufender Wellenlängenrichtung weisen unterschiedliche Höhen auf.

Radiale Seitenflächen der Außenfläche stützen sich an radialen Seitenflächen der Innenfläche über die insgesamt radial verlaufenden, gebogenen Seitenwände der Federhülse in axialer Richtung elastisch nachgiebig aneinander ab.

Die radialen Seitenwände der Federhülse stützen sich an einer Ringstufe von radialen Seitenwänden der Außenfläche radial ab und der an der Innenfläche anliegende Boden der Federhülse ist ballig ausgebildet.

Die Federhülse ist mit die Bodenwand durchschneidenden, radialen Schlitzen ausgebildet.

Ein umlaufender Vorsprung des Bodens greift in eine Ringnut der Innenfläche ein.

An wenigstens einer die Innenfläche axial begrenzenden, radial einwärts verlaufenden Seitenfläche ist eine Ringfläche ausgebildet, an der sich die Federhülse axial abstützt.

Die Seitenwände der Federhülse sind axial und/oder radial elastisch nachgiebig ausgebildet.

Die Radialwellfeder ist durch sich über Teile des Umfangs der Innenfläche bzw. der Außenfläche erstreckende Federsegmente gebildet.

Die wenigstens eine Radialwellfeder ist an einer radial belasteten Seite der Lagerung angeordnet ist und erstreckt sich nur über einen Teil des Umfangs und es ist eine Positioniereinrichtung vorgesehen, die die Positionierung der wenigstens einen Radialwellfeder in Umfangsrichtung festlegt.

Im folgenden werden Beispiele vorteilhafter Ausbildungen erfindungsgemäßer Radialwellfedem genannt, die in der erfindungsgemäßen Entkopplungseinrichtung eingesetzt werden können.

Eine Radialwellfeder zum Umschließen wenigstens eines Teilumfangs eines mit einer kreiszylindrischen Außenfläche und daran anschließenden radialen Seitenflächen ausgebildeten Lagerrings ist als eine wenigstens ein Umfangssegment des Lagerrings umschließende Federhülse mit insgesamt U-förmigem Querschnitt ausgebildet, wobei zumindest der Boden der Federhülse eine federnd verformbare Wölbung aufweist.

Der Boden der vorgenannten Radialwellfeder ist mit einem in Umfangsrichtung verlaufenden radialen Vorsprung ausgebildet.

Die erfindungsgemäße Entkopplungsvorrichtung und der bzw. die erfindungsgemäßen Radialwellfedern können für jedwelche Arten von Lagerungen eingesetzt werden. Vorteilhaft werden sie für Wälzlager eingesetzt, wobei mit solchen Wälzlagern beispielsweise die Wellen eines Kegelscheiben-Umschlingungsgetriebes gelagert sind.

Die Erfindung wird im Folgenden anhand schematischer Zeichnungen beispielsweise und mit weiteren Einzelheiten erläutert.

Es stellen dar:
Figuren 1, 3, 5, 7, 13, 18, 20, 22, 26, 28, 30, 34, 36, 38, 40, 42, 44 und 45 Teilschnitt-Ansichten von Lagerungen, geschnitten parallel zur Lagerachse;
Figuren 2, 4, 6, 8, 14, 15, 16, 27, 29, 37, 39 und 43 Teilschnitt-Ansichten der verschiedenen Ausführungsformen von Lagerungen, geschnitten senkrecht zur Lagerachse;
Figuren 9 und 11 Teilseiten-Ansichten zweier verschiedener Ausführungsformen von Radialwellfedern;
Figuren 10 und 12 Ausschnitte der Ansichten der Figuren 9 und 11;
Figur 17 einen Teil-Aufsicht, teilweise geschnitten, einer Lagerung mit einer besonderen Ausführungsform von Radialwellfedern;
Figuren 19 und 21 Teil-Seitenansichten von Radialwellfedern;
Figuren 23 einen vergrößerten Ausschnitt der Figur 22;
Figur 24 eine Teil-Seitenansicht einer Radialwellfeder;
Figur 25 eine Teil-Aufsicht auf nebeneinander angeordnete Radialwellfedern;
Figur 31 einen vergrößerten Ausschnitt der Figur 30;
Figur 32 eine Teil-Seitenansicht auf eine Radialwellfeder;
Figur 33 eine Teil-Aufsicht auf nebeneinander angeordnete Radialwellfedern,
Figur 35 einen Ausschnitt der Figur 34;
Figur 41 einen vergrößerten Ausschnitt der Fig. 40,
Figuren 46 und 47 Teilschnitt- und Teilseiten-Ansichten zweier weiterer Ausführungsformen von Radialwellfedern,
Figuren 48 und 49 Perspektiv-Ansichten zweier verschiedener Anordnungen von Radialwellfeder-Segmenten mit Positionier-Bauteilen;
Figur 50 eine Seitenansicht eines Radialwellfeder-Segments, wie es in den Figuren 48 und 49 verwendet wird;

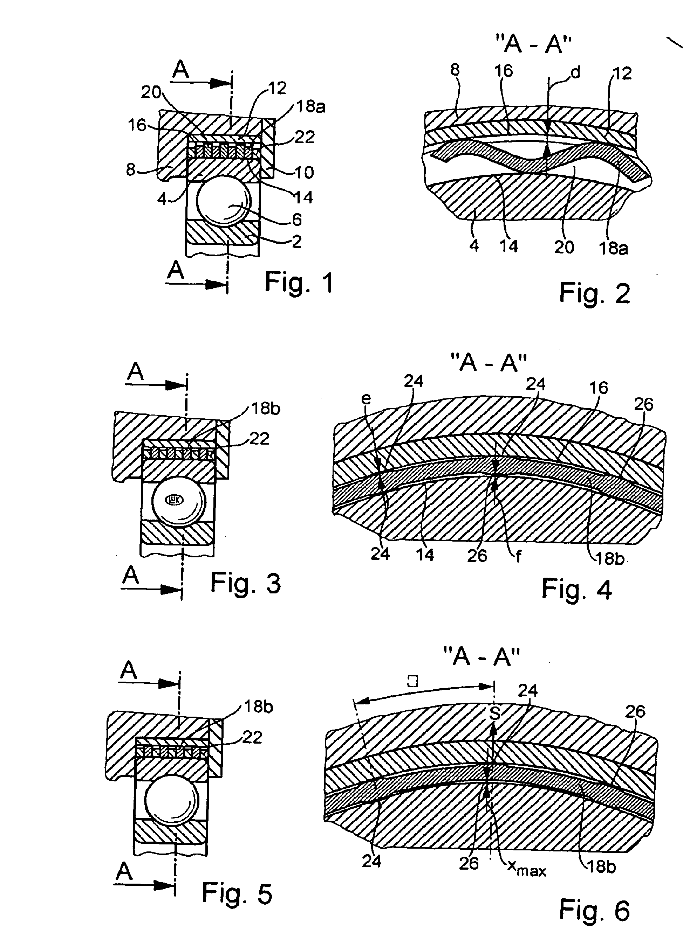

Gemäß Figur 1 wird eine nicht dargestellte Welle eines Kegelscheibenpaars eines Kegelscheiben-Umschlingungsgetriebes von einem Lagerinnenring 2 umschlossen, zwischen dem und einem konzentrisch dazu angeordneten Lageraußenring 4 Wälzkörper 6 angeordnet sind, so dass die Bauteile 2, 4 und 6 insgesamt ein Wälzlager bilden. Es versteht sich, dass die Außenfläche des Lagerinnenrings 2, auf der die Wälzkörper 6 sich abwälzen, unmittelbar durch eine entsprechend bearbeitete Außenfläche der nicht dargestellten Welle gebildet sein können. Der Lageraußenring 4 ist in einer Ringausnehmung eines Grundkörpers 8, beispielsweise eines Getriebegehäuses aufgenommen, die gemäß Figur 1 nach rechts durch einen abnehmbaren Ringdeckel 10 verschlossen ist.

Die Außenfläche des Lageraußenrings 4 stützt sich nicht unmittelbar am Boden der Ringausnehmung ab, sondern unter Zwischenanordnung verschiedener Ringbauteile und eines optional in die Ringausnehmung eingepassten Schale 12. Genauer sind im dargestellten Beispiel zwischen der Außenfläche 14 des Lageraußenrings 4 und der Innenfläche 16 der Schale 12 vier ringförmige Radialwellfedern 18a angeordnet, zwischen denen zur axialen Abstandssicherung Anschlagringe 20a angeordnet sind. Beidseitig axial außen sind Distanzringe 22a vorgesehen.

Die Steifigkeit der Radialwellenfedern ist derart, dass mit den vier Radialwellfederringen bzw. Radialwellfedern die gewünschte Steifigkeit der Lagerung gegenüber radialen Verschiebungen der nicht dargestellten Lagerwelle erzielt wird. Während die Radialwellfedern 18a, wie aus Figur 2, die eine Detailansicht der Figur 1 in Richtung A-A zeigt, derart geformt sind, dass sie ständig in Anlage an der Außenfläche 14 und Innenfläche 16 sind, sind die Anschlagringe 20 derart dimensioniert, dass zwischen ihnen und dem Gehäusering 12 ein radiales Spiel d besteht. Auf diese Weise kann sich der Lageraußenring 4 gemäß Figur 2 unter elastischer Verformung der Radialwellfedern 18a um eine Strecke d nach oben bewegen, bis die Anschlagringe 20 in Anlage an die Innenfläche 16 kommen.

Der beispielsweise aus Stahl gefertigte Gehäusering 12 ist optional und dient beispielsweise dazu, Verschleiß der Ausnehmung bzw. Bohrung des Grundkörpers 8, der aus Leichtmetall bestehen kann, zu verhindern.

In den nachfolgenden Ausführungsbeispielen, die anhand von den Figuren 1 und 2 ähnlichen Ansichten erläutert werden, sind jeweils nur diejenigen Bauteile mit Bezugszeichen versehene, die zur Erläuterung wesentlich sind.

Während bei dem Ausführungsbeispiel gemäß den Figuren 1 und 2 die Radialwellfedern 18a längs des Umfangs im wesentlichen konstanten Querschnitt aufweisen und lediglich in Umfangsrichtung gewellt sind, sind bei der Ausführungsform gemäß Figuren 3 und 4 die Radialwellfedern 18b mit Höckern versehen und sind zwischen den Radialwellfedern 18b und axial außerhalb lediglich Positionierringe 22 vorgesehen.

Wie aus Figur 4 ersichtlich, sind die Radialwellfedern 18a nach innen und außen mit im Umfangsrichtung beabstandeten Auflagehöckern 24 versehen, die in ständiger Anlage an der Außenfläche 14 bzw. Innenfläche 16 sind. Zwischen den Auflagehöckern 24 sind Anschlaghöcker 26 ausgebildet, zwischen denen und den jeweiligen Flächen im unbelasteten Zustand des Lagers nach außen hin ein Spiel e und nach innen hin ein Spiel f besteht. Wie dargestellt, befinden sich die Anschlaghöcker 26 bevorzugt jeweils an der den Auflagehöckern 24 gegenüberliegenden Seite der Radialwellfedern 18b. Bei einer bestimmten Verformung der Radialwellfedern 18b wirken die Anschlaghöcker 26 als Anschläge, so dass unter hoher Last sowohl die Auflage- als auch die Anschlaghöcker Auflagepunkte zur Abstützung des Lageraußenrings 4 am Grundkörper 8 bilden, wodurch sich eine gleichmäßige Abstützung des Wälzlagers ergibt.

Die Figuren 5 und 6 zeigen eine den Figuren 3 und 4 weitgehend entsprechende Ausbildung der Lagerung bzw. der Entkopplung des Lageraußenrings 4 vom Grundkörper 8, mittels der die Geräuschübertragung vom Wälzlager in den Grundkörper vermindert wird. Bei der Ausführungsform gemäß Figuren 5 und 6 sind die Anschlaghöcker 26 unterschiedlich hoch ausgebildet. Es sei angenommen, dass das Lager senkrecht nach oben in Richtung des Pfeils S belastet bzw. radial verschoben wird. Bei längs des Umfangs gleichen Spielen e und f wird das Spiel f beim Scheitel S vollständig aufgebraucht, wohingegen zwischen den benachbarten Anschlaghöckern und den zugehörigen Flächen ein Restspiel verbleibt, da die Annäherung an diesen Stellen entsprechend dem Umfangswinkel ϕ geringer ist.

Damit die Anschläge gleichzeitig zur Wirkung kommen, werden die radialen Spiele an den einzelnen Höckern entsprechend der jeweiligen Winkellage angepasst. Dies führt zu einer gleichmäßigeren Lastverteilung für das Lager. Für die einzelnen Spiele gilt:
x(ϕ) = xₘₐₓ **•** cos (ϕ), wobei xₘₐₓ das Spiel am Scheitelpunkt ist.

Es ist in vielerlei Hinsicht vorteilhaft, die Radialwellfedern bzw. Federringe in Umfangsrichtung festzulegen. Die Positionierung der Radialwellfedern in Umfangsrichtung kann auf unterschiedlichste Weise erfolgen.

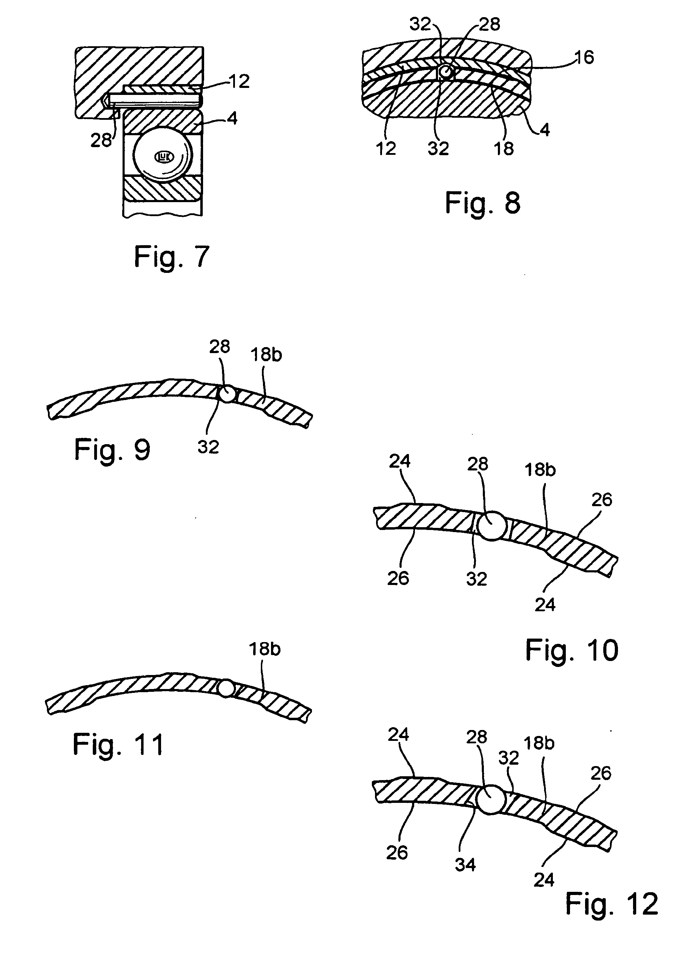

Gemäß Figuren 7 und 8 greift ein Stift 28, der in eine Ausnehmung 30 des Gehäuserings 12 eingreift, zusätzlich in einen Schlitz 32 ein, mit dem die Radialwellfedern 18 ausgebildet sind. Wie unmittelbar ersichtlich, ist der Stift 28 auf diese Weise in Umfangsrichtung unverrückbar zwischen dem Lageraußenring 4 und dem Gehäusering 12 gehalten, so dass er den bzw. die Radialwellfedern 18 in Umfangsrichtung fixiert.

Vorteilhaft ist, wenn die Wellen bzw. Höcker von benachbarten Radialwellfedern in Umfangsrichtung zueinander versetzt sind, um eine möglichst gleichmäßige Belastung des Lagers zu erreichen. Um einen gegenseitigen Versatz der in Umfangsrichtung festgelegten Radialwellfedern zu realisieren, müssten unterschiedliche Radialwellfedern mit verschiedener relativer Anordnung von Schlitz und Höckern bzw. Wellen hergestellt werden. Zur Reduzierung der Variantenvielfalt ist es vorteilhaft, den Schlitz 32 derart zwischen Höcker zu legen, dass bei wechselweise umgekehrter, das heißt um 180° verdrehter Montage der Radialwellfedern die gewünschte Positionierung erreicht wird.

Vorteilhaft ist, den Schlitz 32 mittig zwischen einem radial äußeren Auflagehöcker 24 und einem radial inneren Auflagehöcker 24 anzubringen, wie in Figuren 9 und 10 dargestellt, wobei Fig. 10 einen vergrößerten Ausschnitt der Fig. 9 zeigt.

Wie aus Fig. 10 unmittelbar ersichtlich, befindet sich bei der durchgehend eingezeichneten Radialwellfeder 18b links vom Stift 28 ein radial auswärts gerichteter Auflagehöcker und rechts vom Stift 28 ein radial einwärts gerichteter Auflagehöcker. Weiter ist links vom Stift ein dem Auflagehöcker 24 gegenüberliegender, radial einwärts gerichteter Anschlaghöcker und rechts von Stift 28 ein dem Auflagehöcker 24 gegenüberliegender, radial auswärts gerichteter Anschlaghöcker 26. Bei um 180° verdrehtem Einbau der Radialwellfeder 18b ergibt sich die gestrichelt eingezeichnete Anordnung, das heißt einem Anschlaghöcker ist jeweils ein Auflagehöcker axial benachbart.

Es versteht sich, dass es zahlreiche weitere Möglichkeiten von Höcker- bzw. Wellenanordnungen und Schlitzen gibt, mit denen sich bei geringer Bauteile-Vielfalt hinsichtlich der Radialwellfeder eine möglichst gleichmäßige Kraftverteilung ergibt.

Wegen der geringen Unterschiede der Höckerhöhen ist es schwierig, bei Ausbildung der Radialwellfedern gemäß Figuren 9 und 10 deren richtigen, das heißt jeweils um 180° verdrehten Einbau zu erkennen. Dieses Problem ist dadurch lösbar, dass gemäß Figuren 11 und 12 der Schlitz 32 mit zur radialen Richtung schräg verlaufenden Seitenwänden 34 ausgebildet wird. Damit kann auf einfache Weise erkannt werden, ob axial benachbarte Radialwellfedern um 180° verdreht eingebaut sind.

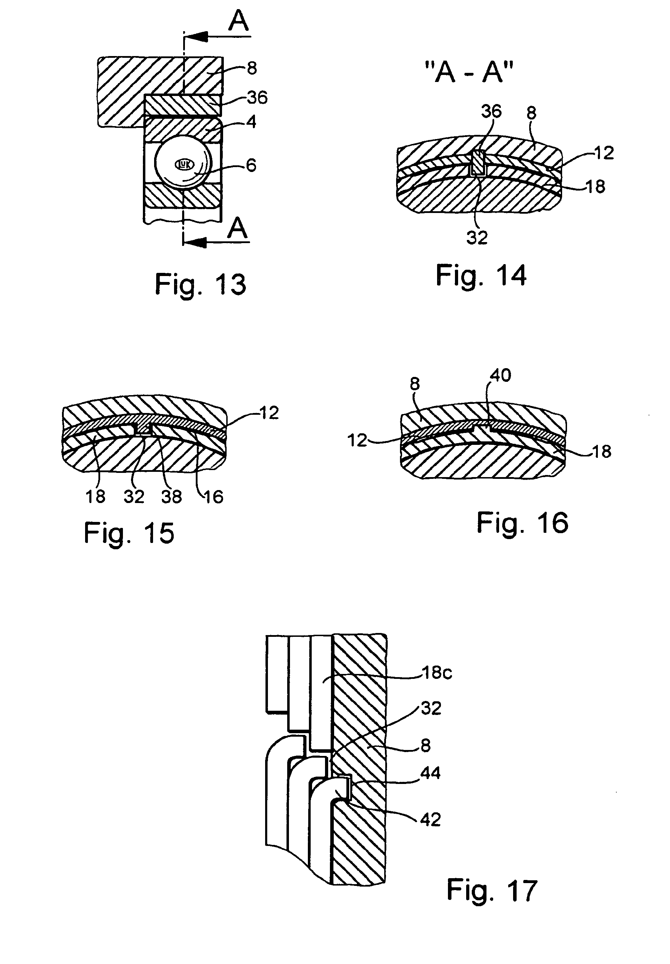

Für die umfangsmäßige Fixierung der Radialwellfedern 18 relativ zum Grundkörper 8 gibt es unterschiedlichste Möglichkeiten. Figuren 13 und 14 zeigen eine Passfeder 36, die in eine Nut im Grundkörper 8 eingesetzt ist und Schlitze im Gehäusering 12 und der radialen Feldfeder 18 durchdringt.

Figur 15 zeigt ein Ausführungsform, bei der der Gehäusering 12 mit einer radialen Rippe versehen ist, die in den Schlitz 32 der Radialwellfeder 18 eingreift.

Bei der Ausführungsform gemäß Figur 16 ist die Radialwellfeder 18 mit einer radial auswärts verlaufenden Rippe 40 versehen, die in eine Ausnehmung des Gehäuserings 12 eingreift. Der Gehäusering 12 ist in Umfangsrichtung unverrückbar am Grundkörper 8 gehalten.

Eine weitere Anordnung zur axialen Festlegung der Radialwellfedern ist in Figur 17 dargestellt. Bei dieser Ausführungsform endet jede Radialwellfeder 18c auf einer Seite des Schlitzes 32 in einem axial verlaufenden Vorsprung bzw. Zapfen 42. Der Zapfen 42 der axial äußersten Radialwellfeder greift in eine in einer radialen Fläche des Grundkörpers 8 ausgebildete Ausnehmung 44 ein. Die Zapfen 42 der axial jeweils benachbarten Radialwellfedern greifen in den Schlitz 32 der gemäß Figur 17 jeweils rechtsseitig benachbarten Radialwellfeder ein. Die Radialwellfederringe können kostengünstig als Stanz-Biegeteile hergestellt werden.

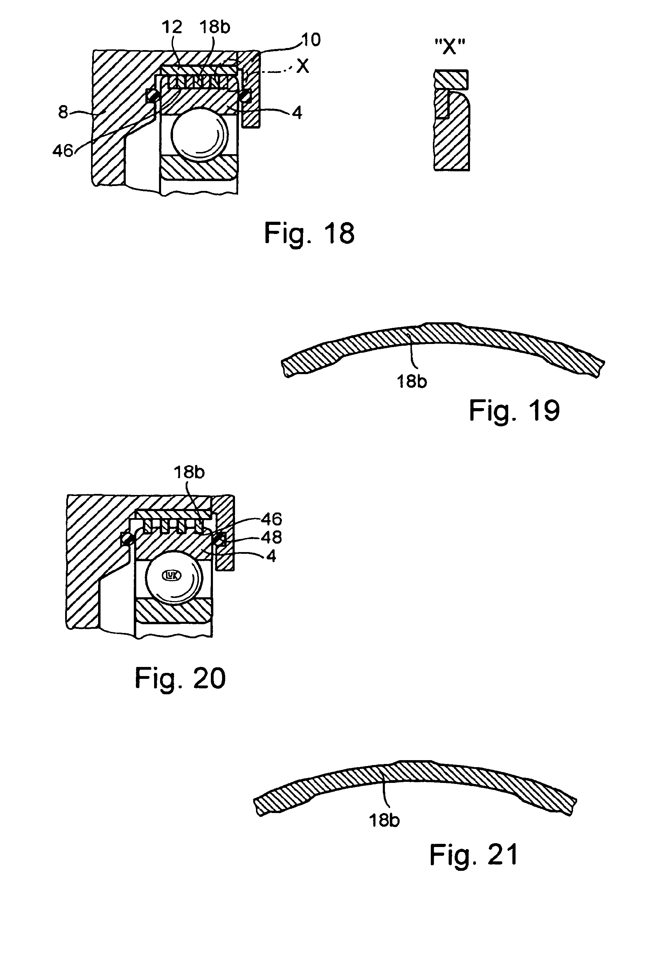

Anhand der Figuren 18 bis 25 werden im Folgenden weitere vorteilhafte Ausführungsformen von Vorrichtungen erläutert, mit denen die Lagerung vom Grundkörper entkoppelt werden kann.

Gemäß Figur 18 ist die Außenfläche des Lageraußenrings 4 mit einer breiten Umfangsnut 46 versehen, in der Radialwellfedern 18b angeordnet sind. Radialwellfedern 18b können beispielsweise ähnlich vormontiert werden, wie Sicherungsringe in Wellennuten angebracht werden. Die axial außerhalb der Umfangsnut 46 verbleibenden Schultern des Lageraußenrings 4 (vergrößerte Darstellung X) kann unmittelbar einen radialen Anschlag bilden. Weiter können zwischen Seitenwänden des Grundkörpers 8 bzw. des Ringdeckels 10 und dem Lageraußenring O-Ringe 48 zur axialen Führung angebracht sein.

Die Ausführungsform gemäß Figuren 20 und 21 unterscheidet sich von der der Figuren 18 und 19 lediglich darin, dass in der Außenfläche des Lageraußenrings 4 mehrere Nuten 46 ausgebildet sind, in denen jeweils eine einzelne Radialwellfeder 18b angeordnet ist.

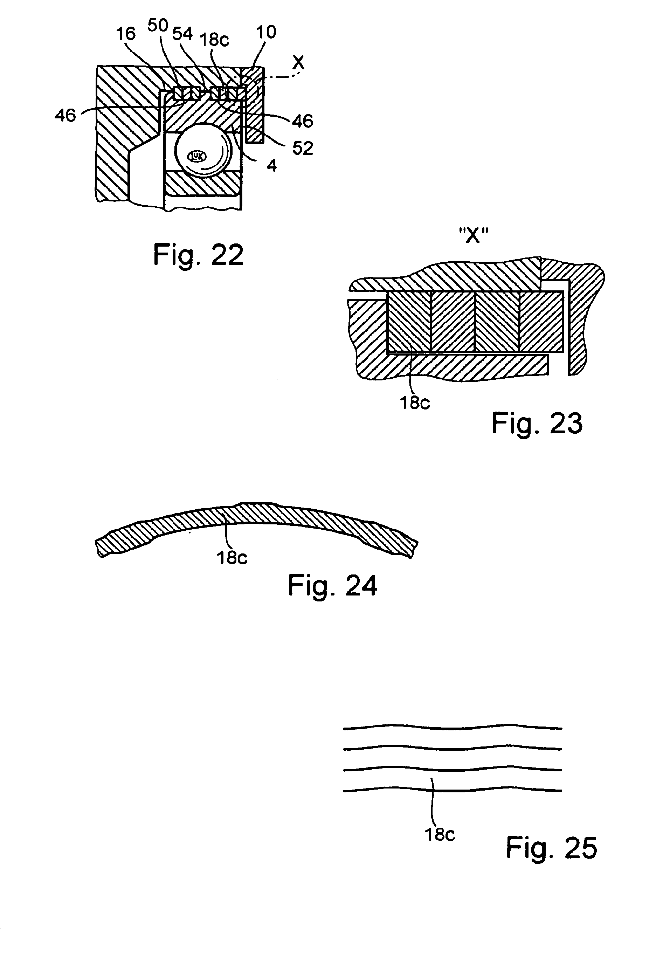

Bei der Ausführungsform gemäß Figuren 22 bis 25 ist der Lageraußenring 4 mit zwei Umfangsnuten 46 versehen, wobei in der gemäß Figur 22 linken Umfangsnut drei Radialwellfedern 18c angeordnet sind und in der axial offenen rechten Umfangsnut 46 vier Radialwellfedern 18c angeordnet sind. Die am Grundkörper 8 ausgebildete Gegen- bzw. Innenfläche 16 weist ein Stufe 50 auf, an der sich die linke Axialwellfeder abstützt. Die axial äußerste Radialwellfeder 18c in der rechten Umfangsnut 46 stützt sich an einer radial verlaufenden Seitenfläche 52 des Ringdeckels 10 ab. Figur 23 zeigt den Ausschnitt X der Figur 22 in vergrößerter Darstellung. Die einzelnen Radialwellfedern 18c sind bezüglich ihrer radialen Erstreckung mit Höckern ähnlich beispielsweise Ausführungsform gemäß Figur 4 ausgebildet (siehe Figur 24). Zusätzlich sind die Radialwellfedern 18c in axialer Richtung gewellt, wie aus Figur 25 ersichtlich, die eine Aufsicht auf einen Teil der axial benachbarten Radialwellfedern 18c zeigt. Mit der Anordnung gemäß Figuren 22 bis 25 wird eine Abkopplung bzw. akustische Entkopplung des Lagers vom Grundkörper in radialer und axialer Richtung erzielt. Die zwischen den Umfangsnuten 46 ausgebildete Nase 54 des Lageraußenrings 4 kann als Anschlag genutzt werden.

Es versteht sich, dass die Anordnung gemäß den Figuren 22 bis 25 ähnlich wie die anderen Ausführungsbeispiele in vielfacher Hinsicht abgeändert werden kann. Die Anzahl der Nuten, die Wellung der Radialwellfedern bzw. deren Ausbildung mit Höckern, die axiale und radiale Führung und die Anschläge können in jeweils zweckentsprechender Weise durch Änderung der Anzahl der Radialwellfedern, der Nuten, zusätzlicher axialer Wellung, der Verwendung von O-Ringen usw. ausgebildet werden.

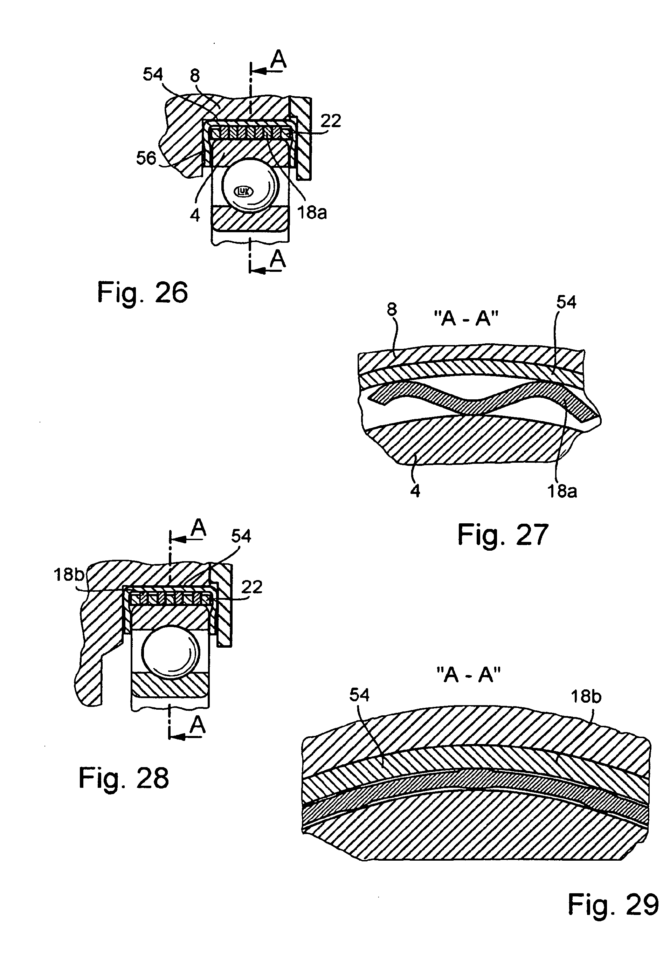

Figuren 26 und 27 zeigen die Anordnung von Radialwellfedern 18a zwischen dem Lageraußenring 4 und einer auf den Lageraußenring 4 aufgesetzten Ringhülse 54 mit insgesamt U-förmigen Querschnitt. Die Radialwellfedern 18a sitzen lose auf dem Lageraußenring 4 und werden axial von Positionierringen 22 gehalten, die zwischen den äußeren Radialwellfedern und den radialen Seitenwänden 56 der Hülse 54 angeordnet sind. Die Hülse kann beispielsweise als Blechumformteil kostengünstig hergestellt werden und erfüllt durch zweckentsprechend gebogene Ausbildung der Seitenwände 56 gleichzeitig die Funktion einer axialen Feder ähnlich einer Tellerfeder. Auf diese Weise ist die Lagerung gemäß Figuren 26 und 27 axial und radial vom Grundkörper 8 abgekoppelt.

Die Ausführungsform gemäß Figuren 28 und 29 unterscheidet sich von der der Figuren 26 und 27 dadurch, dass anstelle der Radialwellfedern 18a mit Höckern versehene Radialwellfedern 18b verwendet werden und dass zwischen den Radialwellfedern 18b Positionierringe 22 angeordnet sind.

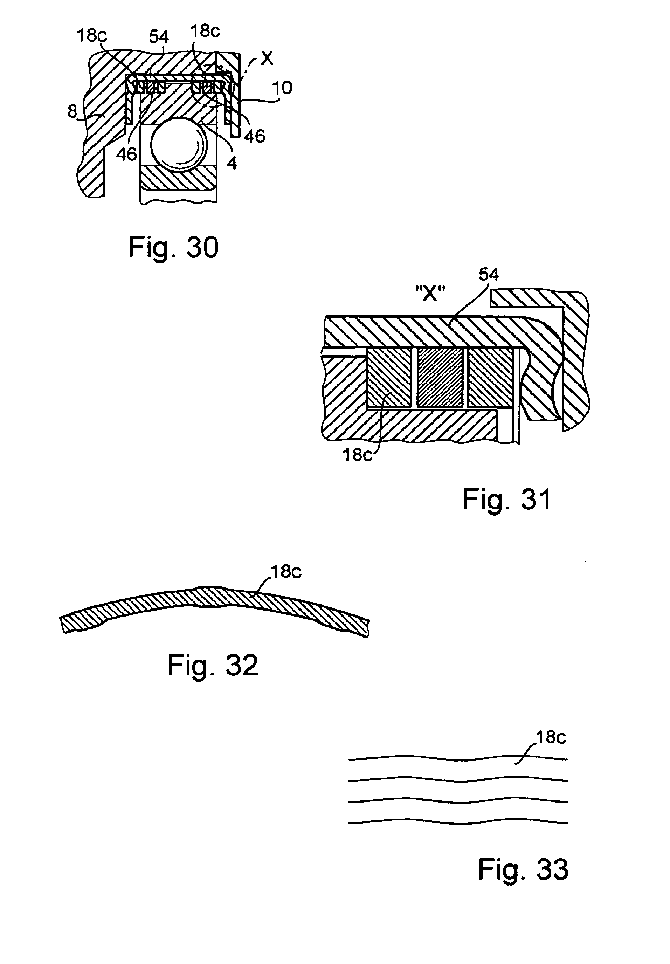

Bei der Ausführungsform gemäß Figuren 30 bis 33 ist der Lageraußenring 4 mit zwei axial nach außen hin offenen Umfangsnuten 46 versehen, in denen axial und radial gewellte Radialwellfedern 18c angeordnet sind, die von einem Hülsenring 54 umschlossen sind. Bei dieser Ausführungsform ist die Hülse 54 im Übergang von ihrem Boden zu den Seitenwänden 56 doppelt abgebogen, und dient zur axial und radial vorgespannten Halterung der Radialwellfedern 18c. Die Hülse selbst hat keine Funktion einer Axialfeder. Die Funktion der Axialfeder bzw. axialen Entkopplung wird von den auch axial gewellten Radialwellfedern 18c übernommen. Die Hülse 54 dient lediglich als Anschlag. Figur 31 zeigt den vergrößerten Ausschnitt X der Figur 30. Figur 32 zeigt eine Seitenansicht auf eine Radialwellfeder 18c und Figur 33 zeigt eine Aufsicht auf einen Ausschnitt der nebeneinander angeordneten, auch axial gewellten Radialwellfedern 18c.

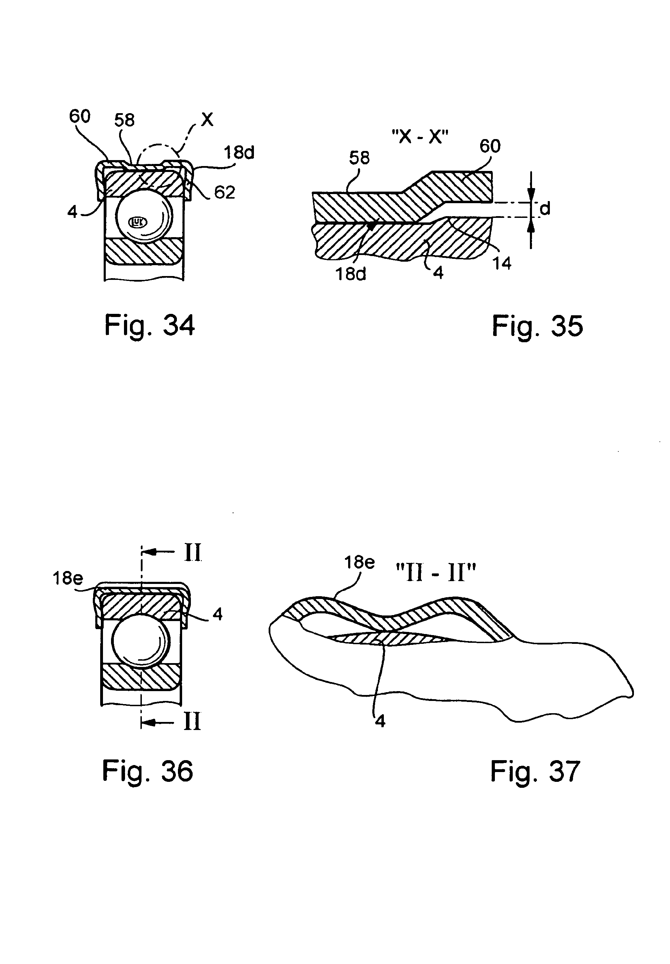

Anhand der Figuren 34 bis 45 werden im Folgenden Ausführungsformen von Entkopplungsvorrichtungen erläutert, bei denen die Radialwellfedern durch eine ringförmige Federhülse gebildet sind.

Gemäß Figur 34 umschließt eine im Querschnitt insgesamt U-förmige ringförmige Federhülse 18d den Lageraußenring 4 in axialer und radialer Richtung. Der Boden der Federhülse 18d weist eine radiale Wellung mit axialer Wellenlängenrichtung derart auf, dass sich eine von außen sichtbare umlaufende Nut 58 ergibt. Figur 35 zeigt den Ausschnitt X der Figur 34 in vergrößerter Darstellung. Deutlich sichtbar ist, wie die Außenfläche 14 ebenfalls mit einer flachen Ausnehmung ausgebildet ist, sodass das axial außerhalb der Ausnehmung bzw. der Nut 58 gebildete Spiel d zwischen der Innenseite der Federhülse 18d und der Außenfläche 14 des Außenrings 4 kleiner ist als die radiale Wellung der Federhülse 18d. Dieses Spiel d steht für eine radiale Verschiebung des Lagers zur Verfügung und kann durch zweckentsprechende Tiefe der Ausnehmung und Höhe der Wellung eingestellt werden.

Gegenüber den bisher geschilderten Ausführungsformen zeichnet sich die Ausführungsform gemäß Figuren 34 und 35 durch eine besonders einfache Ausbildung mit wenigen Teilen aus. Es versteht sich, dass die Ausbildung der Außenfläche 14 des Außenrings 4 mit einer umlaufenden Ausnehmung bzw. Nut nicht zwingend ist. Mit Hilfe der flachen Nut in der Außenfläche 14 des Lageraußenrings 4 wird erreicht, dass die Wölbungshöhe der Federhülse 18d unabhängig von dem radialen Spiel d gewählt werden kann.

Wie aus Figur 34 weiter ersichtlich, können die Seitenwände 62 der Federhülse 18d zusätzlich beispielsweise im Übergangsbereich zu dem Boden 60 auswärts gewölbt sein, so dass die Federhülse die Funktion einer Axialfeder und Radialfeder übernimmt.

Die Federhülse 18d gemäß Figur 34 weist eine radiale Wölbung bzw. Wellung mit axialer Wellenrichtung auf. Im Gegensatz dazu weist die Federhülse 18e der Ausführungsform gemäß Figuren 36 und 37 eine radiale Wellung mit in Umfangsrichtung verlaufender Wellenlänge auf, wie aus Figur 37 ersichtlich, die eine Ansicht in Richtung der Pfeile II-II in Figur 36 zeigt. Mit der Ausführungsform gemäß Figuren 36 und 37 wird der Vorteil erzielt, dass durch größere mögliche Wellenlängen größere elastische Nachgiebigkeiten erzielt werden.

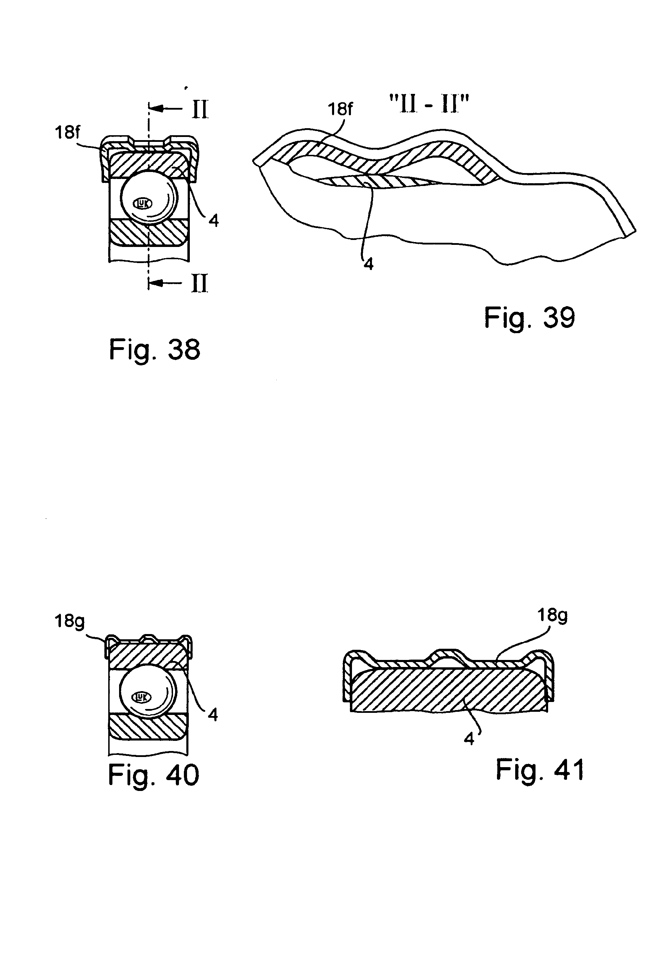

Die Figuren 38 und 39 zeigen eine Kombination der Ausführungsformen der Federhülse gemäß Figuren 34 bis 37, wobei die Federhülse 18d der Figuren 38 und 39 eine radiale Wellung mit axialer und in Umfangsrichtung verlaufender Wellenlängenrichtung aufweist. Damit wird ein noch größeres Energieaufnahmevermögen aufgrund der elastischen Verformungen in größeren Werkstoffbereichen der Federhülse erzielt.

Figuren 40 und 41 zeigen eine Ausführungsform einer Federhülse 18g, die grundsätzlich der der Figur 34 entspricht, jedoch mehrere radiale Wölbungen mit axialer Wellenlängenrichtung hat, deren Höhe unterschiedlich hoch ist. Damit lassen sich progressive Kennlinien erzielen. Bezüglich einer axialen Verschiebung des Lager hat die Federhülse 18g keine federnde sondern lediglich Anschlagwirkung.

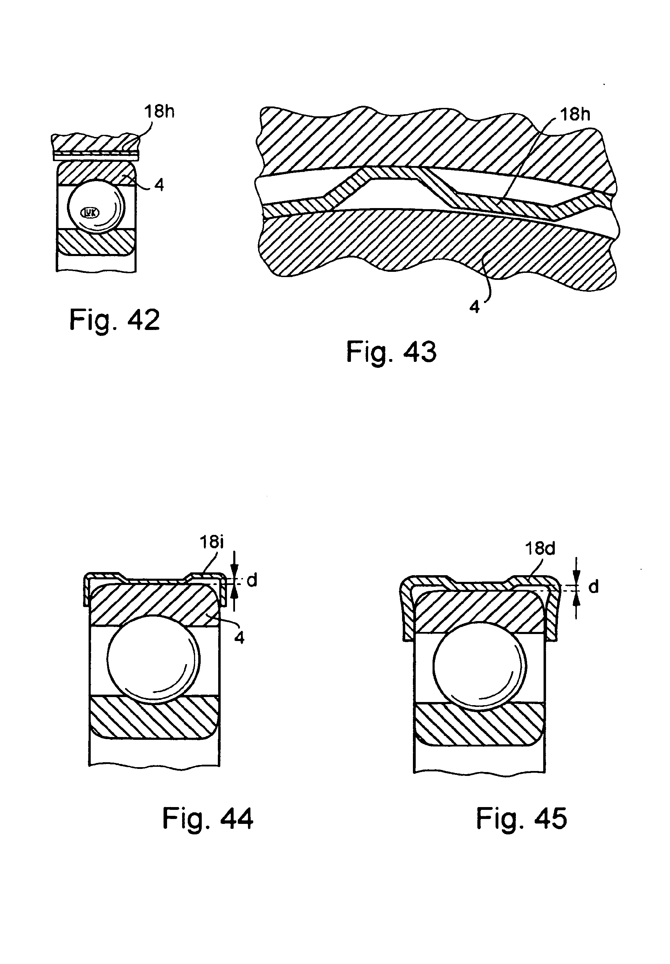

Die Ausführungsform gemäß Figur 42 und 43 zeigt eine sich über die gesamte Breite des Außenrings 4 erstreckende Radialwellfeder, deren radiale Wellung eine Wellenlängenrichtung in Umfangsrichtung hat, wobei die Wellenhöhen unterschiedlich sind. Damit lassen sich nachgiebigere, progressive Kennungen erzielen.

Es versteht sich, dass die Radialwellfeder 18h durch Seitenwände zu einer Federhülse ergänzt werden kann. Weiter können nicht nur die Wellenhöhen sondern auch die Wellenlängen der Wellungen unterschiedlich sein.

Die Ausführungsform gemäß Figuren 44 und 45 entspricht der der Figur 34, wobei die Außenfläche des Lageraußenrings 4 ohne Ausnehmung bzw. Nut ausgebildet ist, so dass die Wellenhöhe des Federrings 18i gleich der möglichen radialen Verschiebung des Lagers ist. Die Seitenwände des Federrings 18i verlaufen parallel zu den Seitenwänden des Lageraußenrings 4, so dass die Federhülse 18i keine Funktion einer Axialfeder hat. Die Federhülse 18d der Figur 45 entspricht der der Figur 34, das heißt die Federhülse 18d hat zusätzlich die Funktion einer Axialfeder.

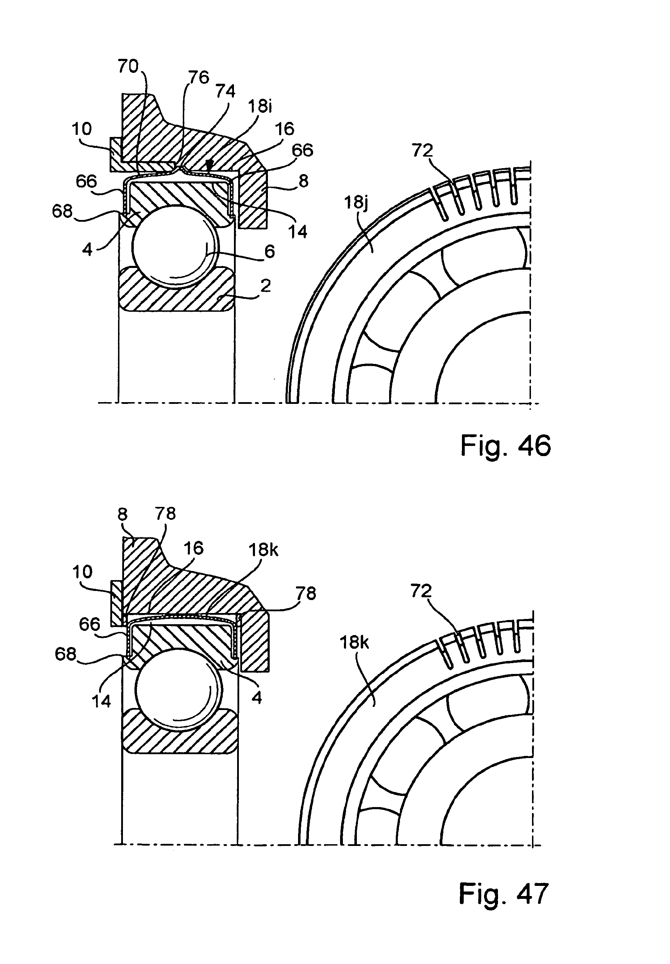

Figur 46 stellt in der linken Figurenhälfte im Längsschnitt und in der rechten Figurenhälfte in Seitenansicht eine weitere Ausführungsform einer als Federhülse ausgebildeten Radialwellfeder dar. Der Lageraußenring 4 wird von einer aus dünnwandigen Federstahlblech bestehenden Federhülse 18j umschlossen, die im Querschnitt insgesamt U-förmig ist und deren radiale Seitenwände 66 sich radial an einer Ringstufe 68 abstützen, die an der Seitenfläche des Außenrings 4 ausgebildet ist. Eine radiale Nachgiebigkeit wird durch eine Balligkeit bzw. radiale Auswölbung des Bodens 70 der Federhülse 18j erzielt. Die Grundsteifigkeit kann über die Blechdicke beeinflusst werden. Die Federkennlinie kann durch Wahl des Krümmungsverlaufes des Bodens, ggf. mehrfach gewellt, und/oder die Kontur der Seitenwände 66 zweckentsprechend gewählt werden. Beispielsweise kann die Federkennlinie dadurch beeinflusst werden, dass der Boden 70 die Außenfläche des Außenrings 4 nach einer gewissen radialen Verformung berührt. Weiter kann eine axiale Nachgiebigkeit der Federhülse 18k durch entsprechende Ausbildung der Seitenwände 66 und der benachbarten Seitenflächen des Lageraußenrings 4 beeinflusst werden. Durch unsymmetrische Biegung in ihrer Ebene können die radialen Seitenwände 66 zusätzlichen eine Beitrag zur radialen Nachgiebigkeit der Federhülse 18j leisten.

Eine erhöhte Nachgiebigkeit in Umfangsrichtung kann durch radiale Schlitze 72 erzielt werden, die den Boden 70 und teilweise die Seitenwände 66 der Federhülse 18k durchdringen. Durch die Unterbrechung der Membranspannungen in der Mantelfläche bzw. im Boden der Federhülse 18k wird auch deren radiale Nachgiebigkeit erhöht.

Dadurch, dass die radialen Seitenwände 66 den Außenring 4 weit über- bzw. umgreifen, wird einerseits der radiale Platzbedarf minimiert und andererseits eine relativ große axiale Nachgiebigkeit ermöglicht. Ein Abrutschen der Seitenwände 66 von der Ringstufe 68 kann erforderlichenfalls durch die Ausbildung der Stufe 68 mit einer entsprechenden Hinterschneidung verhindert werden. Die Federhülse 18j muss sich nicht einteilig um den gesamten Umfang des Außenrings 4 erstrecken. Sie kann in Form zweier Umfangssegmente ausgebildet sein. Ein Zusammenhalt der Federhülse ist im Einbauzustand durch die aufnehmende Bohrung bzw.- Ausnehmung des Grundkörpers 8 gewährleistet, wobei durch die Balligkeit der Federhülse deren Montage erleichtert wird.

Zur axialen Fixierung des Lagers kann ein umlaufender radialer Vorsprung 74 der Federhülse 18j dienen, der in eine Ringnut 76 am Grundkörper 8 eingreift. Die Ringnut 76 kann durch eine an der Innenfläche 16 des Grundkörpers 8 ausgebildete Abstufung gebildet sein, die durch den an dem Grundkörper 8 befestigten Ringdeckel 10 seitlich geschlossen wird. Es versteht sich, dass bei geringen aufzunehmenden Kräften die Federhülse 18k radial derart nachgiebig ausgebildet sein kann, dass sie zusammen mit dem Lagerinnenring 2 und dem Lageraußenring 4 und dem dazwischen angeordneten Wälzkörpern 6 seitlich in den Grundkörper eingepresst werden kann, so dass die Ringnut 76 in die Innenfläche 16 eingestochen sein kann.

Die Ausführungsform der Figur 47 unterscheidet sich von der der Figur 46 in erster Linie dadurch, dass die axiale Fixierung der Federhülse 18k durch Ringflächen 78 von Einlegeringen 78 erfolgt, über die sich die Federhülse 18k an einer radialen Seitenfläche des Grundkörpers 8 bzw. des entsprechend ausgebildeten Ringdeckels 10 abstützt. Die Einlegeringe können beispielsweise aus Kunststoff bestehen. Eine axiale Zwängung der Federhülse 18k infolge einer radialen Verschiebung kann erforderlichenfalls durch axiales Spiel vermieden werden, das jedoch sehr klein sein kann.

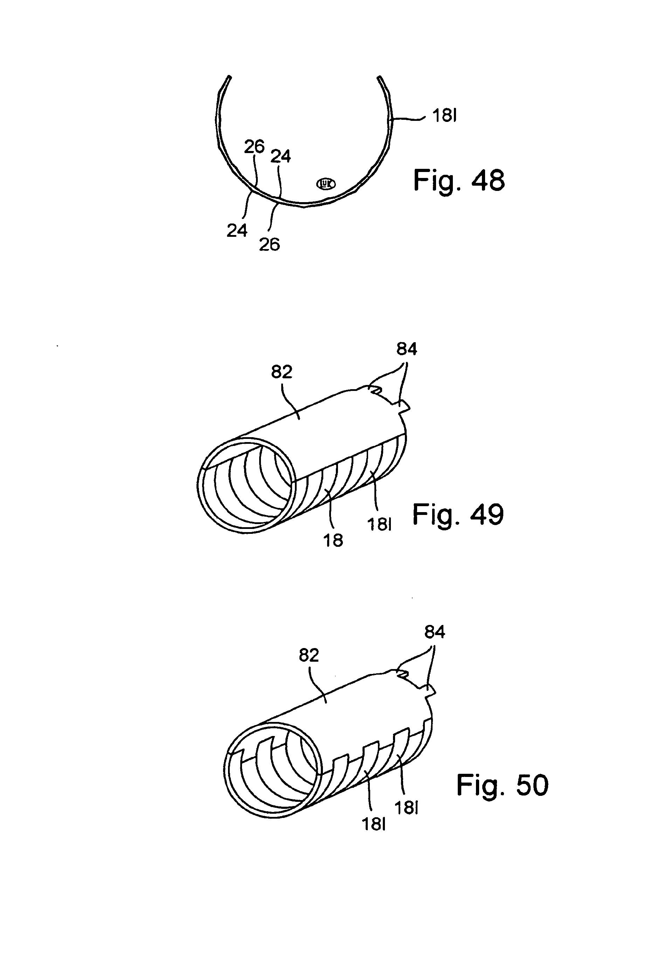

Figuren 48 bis 50 stellen Ausführungsformen der Entkopplungsvorrichtung dar, die mit Radialwellfeder-Segmenten arbeitet, die den nicht dargestellten Lageraußenring 4 (Figur 1) nicht vollständig umschließen, sondern nur längs eines Umfangsbereiches beispielsweise von etwa 180° und die auf der belasteten Seite des Lageraußenrings angeordnet sind.

Figur 48 zeigt eine Seitenansicht eines Radialwellfeder-Segments 181, das sich über mehr als einen halben Umfang erstreckt und bezüglich seiner Wellung ähnlich ausgebildet ist wie beispielsweise die Radialwellfeder 18b gemäß Figur 4. Um den nicht dargestellten Lageraußenring sind axial nebeneinander mehrere Radialwellfeder-Segmente 18I angeordnet, wie in Figur 49 gezeigt. Zur Positionierung der Radialwellfeder-Segmente 18I in Umfangsrichtung dient ein Positionierbauteil 82, das als Hülsensegment derart ausgebildet ist, dass es zusammen mit den Radialwellfeder-Segmenten 181 den Lageraußenring 4 vollständig umschließt. Zur Fixierung in Umfangsrichtung weist das Positionierbauteil 82 axiale Ansätze 84 auf, die in Ausnehmungen eingreifen, die an dem Grundkörper 8 (Figur 1) ausgebildet sind. Bei der Ausführungsform gemäß Figur 47 ist das Positionierbauteil 62 derart ausgebildet, dass alle Radialwellfeder-Segmente 18I axial ohne Versatz nebeneinander angeordnet sind.

Bei der Ausführungsform gemäß Figur 50 ist das Positionierbauteil 82 an seinen Seitenrändern mit Ausnehmungen und Vorsprüngen versehen, so dass benachbarte Radialwellfeder-Segmente 18I jeweils in Umfangsrichtung versetzt angeordnet sind. Dies ist vorteilhaft, damit die in Figur 48 sichtbaren Auflagehöcker 24 und Anschlaghöcker 26 (genaueres siehe Figur 4) beispielsweise auf Lücke angeordnet sind.

Ein Vorteil, der mit den Ausführungsformen gemäß Figuren 48 bis 50 erzielt wird, liegt darin, dass die Ausnutzung von beispielsweise aufwendigem Stanzblech für die Radialwellfedern gegenüber der Ausbildung von Radialwellfedern, die sich über den gesamten Umfang (ggf. mit Schlitz) erstrecken, deutlich verbessert ist.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombination zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbstständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbstständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

## Patentansprüche

1. Entkopplungsvorrichtung für eine Lagerung einer Welle an einem Grundkörper (8), insbesondere einer Welle eines mit einer Kette als Umschlingungsmittel arbeitenden Kegelscheibenumschlingungsgetriebes, enthaltend
- einen mit einer kreiszylindrischen Außenfläche (14) ausgebildeten Lageraußenring (4), innerhalb dessen die Welle gelagert ist, und
- eine starr mit dem Grundkörper (8) verbundene, die Außenfläche (14) umgebende Innenfläche (16),
wobei zwischen der Außenfläche (14) und der Innenfläche (16) wenigstens eine Radialwellfeder (18d - 18k) angeordnet ist, die unter elastischer Verformung eine begrenzte relative Radialbewegung zwischen der Innenfläche (16) und der Außenfläche (14) zulässt, **dadurch gekennzeichnet, dass** auf die Außenfläche (14) und radial zu dieser verlaufende Seitenflächen eine die Radialwellfeder (18d - 18k) bildende Federhülse mit insgesamt U-förmigem Querschnitt aufgesetzt ist, deren insgesamt achsparallel verlaufender Boden (60) radial ausgebaucht ist.

2. Entkopplungsvorrichtung nach Anspruch 1, wobei der Boden (60) wenigstens zwei axial beabstandete, umlaufende radiale Wellungen mit axialer Wellenlängenrichtung aufweist.

3. Entkopplungsvorrichtung nach Anspruch 1 oder 2, wobei ein Ringbereich (58) zwischen den radialen Wellungen in eine umlaufende Ausnehmung der Außenfläche (14) einragt.

4. Entkopplungsvorrichtung nach einem der Ansprüche 1 bis 3, wobei der Boden (60) der Federhülse (18e) eine radiale Wellung mit in Umfangsrichtung verlaufender Wellenlängenrichtung aufweist.

5. Entkopplungsvorrichtung nach Anspruch 1, wobei radiale Wellungen des Bodens (60) mit axialer und/oder in Umfangsrichtung verlaufender Wellenlängenrichtung unterschiedliche Höhen aufweisen.

6. Entkopplungsvorrichtung nach einem der Ansprüche 1 bis 5, wobei sich radiale Seitenflächen der Außenfläche (14) an radialen Seitenflächen der Innenfläche (16) über die insgesamt radial verlaufenden, gebogenen Seitenwände (62) der Federhülse (18d) in axialer Richtung elastisch nachgiebig aneinander abstützen.

7. Entkopplungsvorrichtung nach Anspruch 1, wobei die radialen Seitenwände (66) der Federhülse (18j; 18k) sich an einer Ringstufe (68) von radialen Seitenflächen der Außenfläche (14) radial abstützen und der an der Innenfläche (16) anliegende Boden (70) der Federhülse (18j; 18k) ballig ausgebildet ist.

8. Entkopplungsvorrichtung nach Anspruch 7, wobei die Federhülse (18j; 18k) mit den Boden (70) durchschneidenden, radialen Schlitzen (72) ausgebildet ist.

9. Entkopplungsvorrichtung nach Anspruch 7 oder 8, wobei ein umlaufender Vorsprung (74) des Bodens (70) in eine Ringnut (76) der Innenfläche (16) eingreift.

10. Entkopplungsvorrichtung nach Anspruch 7 oder 8, wobei an wenigstens einer die Innenfläche (16) axial begrenzenden, radial einwärts verlaufenden Seitenfläche eine Ringfläche (78) ausgebildet ist, an der sich die Federhülse axial abstützt.

11. Entkopplungsvorrichtung nach einem der Ansprüche 7 bis 9, wobei die Seitenwände (66)(66) der Fedefiülse (18j; 18k) axial und/oder radial elastisch nachgiebig ausgebildet sind.

12. Entkopplungseinrichtung nach einem der Ansprüche 1 bis 11, wobei die Radialwellfeder durch sich über Teile des Umfangs der Innenfläche bzw. der Außenfläche erstreckende Federsegmente gebildet ist.

13. Radialwellfeder für eine Entkopplungsvorrichtung nach einem der vorstehenden Ansprüche zum Umschließen wenigstens eines Teilumfangs eines mit einer kreiszylindrischen Außenfläche und daran anschließenden radialen Seitenflächen ausgebildeten Lagerrings (4), **dadurch gekennzeichnet, dass** die Radialwellfeder als eine wenigstens ein Umfangssegment des Lagerrings umschließende Federhülse (18d - 18k) mit insgesamt U-förmigem Querschnitt ausgebildet ist, wobei zumindest der Boden (60; 70) der Federhülse eine federnd verformbare Wölbung aufweist.

14. Radialwellfeder nach Anspruch 13, wobei der Boden (70) mit einem in Umfangsrichtung verlaufenden radialen Vorsprung (74) ausgebildet ist.

## Claims

1. Decoupling device for a bearing arrangement of a shaft on a basic body (8), in particular of a shaft of a continuously variable cone-pulley transmission which operates with a chain as an endless chain-belt, comprising
- a bearing outer ring (4) which is formed with a cylindrical outer surface (14) and within which the shaft is mounted, and
- an inner surface (16) which is rigidly connected to the basic body (8) and which surrounds the outer surface (14),
wherein at least one radial ondular washer (18d - 18k) is arranged between the outer surface (14) and the inner surface (16), which radial ondular washer, under elastic deformation, permits a limited relative radial movement between the inner surface (16) and the outer surface (14), **characterized in that** a spring sleeve which forms the radial ondular washer (18d - 18k) and which has a U-shaped overall cross section is placed onto the outer surface (14) and onto side surfaces which run radially relative to said outer surface, the base (60) of which spring sleeve runs axially parallel overall and is radially bulged.

2. Decoupling device according to Claim 1, wherein the base (60) has at least two axially spaced apart encircling radial undulations with an axial wavelength direction.

3. Decoupling device according to Claim 1 or 2, wherein an annular region (58) between the radial undulations projects into an encircling recess of the outer surface (14).

4. Decoupling device according to one of Claims 1 to 3, wherein the base (60) of the spring sleeve (18e) has a radial undulation with a wavelength direction running in the circumferential direction.

5. Decoupling device according to Claim 1, wherein radial undulations of the base (60) with a wavelength direction running in the axial and/or in the circumferential direction have different heights.

6. Decoupling device according to one of Claims 1 to 5, wherein radial side surfaces of the outer surface (14) are supported in an elastically flexible manner in the axial direction against radial side surfaces of the inner surface (16) via the curved side walls (62), which run radially overall, of the spring sleeve (18d).

7. Decoupling device according to Claim 1, wherein the radial side walls (66) of the spring sleeve (18j; 18k) are supported radially on an annular step (68) of radial side surfaces of the outer surface (14), and the base (70), which bears against the inner surface (16), of the spring sleeve (18j; 18k) is of convex design.

8. Decoupling device according to Claim 7, wherein the spring sleeve (18j; 18k) is formed with radial slots (72) which cut through the base (70).

9. Decoupling device according to Claim 7 or 8, wherein an encircling projection (74) of the base (70) engages into an annular groove (76) of the inner surface (16).

10. Decoupling device according to Claim 7 or 8, wherein, on at least one radially inwardly running side surface which axially delimits the inner surface (16), there is formed an annular surface (78) against which the spring sleeve is axially supported.

11. Decoupling device according to one of Claims 7 to 9, wherein the side walls (66) of the spring sleeve (18; 18k) are of axially and/or radially elastically flexible design.

12. Decoupling device according to one of Claims 1 to 11, wherein the radial ondular washer is formed by spring segments which extend over parts of the circumference of the inner surface or the outer surface.

13. Radial ondular washer for a decoupling device according to one of the preceding claims for surrounding at least a part of the circumference of a bearing ring (4) which is formed with a round cylindrical outer surface and with radial side surfaces adjoining said outer surface, **characterized in that** the radial ondular washer is formed as a spring sleeve (18d - 18k) which surrounds at least one circumferential segment of the bearing ring and which has a U-shaped overall cross section, wherein at least the base (60; 70)
of the spring sleeve has a resiliently deformable bulge.

14. Radial ondular washer according to Claim 13, wherein the base (70) is formed with a radial projection (74) running in the circumferential direction.

## Revendications

1. Dispositif de désaccouplement pour un support sur palier d'un arbre sur un corps de base (8), en particulier d'un arbre d'une transmission à courroie à poulies coniques fonctionnant avec une chaîne en tant que moyen de courroie, contenant :
- une bague extérieure de palier (4) réalisée avec une surface extérieure cylindrique circulaire (14), à l'intérieur de laquelle est monté l'arbre, et
- une surface intérieure (16) entourant la surface extérieure (14), connectée rigidement au corps de base (8),
entre la surface extérieure (14) et la surface intérieure (16) étant disposé au moins un ressort ondulé radial (18d - 18k), qui autorise, par déformation élastique, un mouvement radial limité relatif entre la surface intérieure (16) et la surface extérieure (14), **caractérisé en ce qu'**une douille élastique de section transversale dans l'ensemble en forme de U formant le ressort ondulé radial (18d - 18k) est posée sur la surface extérieure (14) et sur des surfaces latérales s'étendant radialement par rapport à celle-ci, dont le fond (60) s'étendant dans l'ensemble avec son axe parallèle est renflé radialement.

2. Dispositif de désaccouplement selon la revendication 1, dans lequel le fond (60) présente au moins deux ondulations radiales périphériques espacées axialement, avec une direction de longueur d'onde axiale.

3. Dispositif de désaccouplement selon la revendication 1 ou 2, dans lequel une région annulaire (58) entre les ondulations radiales pénètre dans un évidement périphérique de la surface extérieure (14).

4. Dispositif de désaccouplement selon l'une quelconque des revendications 1 à 3, dans lequel le fond (60) de la douille élastique (18e) présente une ondulation radiale avec une direction de longueur d'onde s'étendant dans la direction périphérique.

5. Dispositif de désaccouplement selon la revendication 1, dans lequel des ondulations radiales du fond (60) présentent différentes hauteurs avec une direction de longueur d'onde s'étendant axialement et/ou dans la direction périphérique.

6. Dispositif de désaccouplement selon l'une quelconque des revendications 1 à 5, dans lequel des surfaces latérales radiales de la surface extérieure (14) s'appuient l'une contre l'autre dans la direction axiale élastiquement de manière flexible sur des surfaces latérales radiales de la surface intérieure (16) par le biais des parois latérales cintrées (62) de la douille élastique (18d), s'étendant dans l'ensemble radialement.

7. Dispositif de désaccouplement selon la revendication 1, dans lequel les parois latérales radiales (66) de la douille élastique (18j ; 18k) s'appuient radialement sur un étage annulaire (68) de surfaces latérales radiales de la surface extérieure (14) et le fond (70) de la douille élastique (18j ; 18k) s'appliquant contre la surface intérieure (16) est réalisé sous forme bombée.

8. Dispositif de désaccouplement selon la revendication 7, dans lequel la douille élastique (18j ; 18k) est réalisée avec des fentes radiales (72) coupant le fond (70).

9. Dispositif de désaccouplement selon la revendication 7 ou 8, dans lequel une saillie périphérique (74) du fond (70) vient en prise dans une rainure annulaire (76) de la surface intérieure (16).

10. Dispositif de désaccouplement selon la revendication 7 ou 8, dans lequel une surface annulaire (78) est réalisée sur au moins une surface latérale s'étendant radialement vers l'intérieur, limitant axialement la surface intérieure (16), la douille élastique s'appuyant axialement sur cette surface annulaire.

11. Dispositif de désaccouplement selon l'une quelconque des revendications 7 à 9, dans lequel les parois latérales (66) (66) de la douille élastique (18j ; 18k) sont réalisées de manière élastiquement flexible axialement et/ou radialement.

12. Dispositif de désaccouplement selon l'une quelconque des revendications 1 à 11, dans lequel le ressort ondulé radial est formé par des segments de ressort s'étendant sur des parties de la périphérie de la surface intérieure ou de la surface extérieure.

13. Ressort ondulé radial pour un dispositif de désaccouplement selon l'une quelconque des revendications précédentes, pour entourer au moins une périphérie partielle d'une bague de palier (4) réalisée avec une surface extérieure cylindrique circulaire et des surfaces latérales radiales s'y raccordant, **caractérisé en ce que** le ressort ondulé radial est réalisé sous forme d'une douille élastique (18d - 18k) entourant au moins un segment périphérique de la bague de palier avec une section transversale dans l'ensemble en forme de U, au moins le fond (60 ; 70) de la douille élastique présentant une courbure déformable élastiquement.

14. Ressort ondulé radial selon la revendication 13, dans lequel le fond (70) est réalisé avec une saillie (74) radiale s'étendant dans la direction périphérique.
